# EUROPEAN PATENT APPLICATION

(11) **EP 4 266 631 A1**
(43) Date of publication of application: **25.10.2023**
(21) Application number: 21913345.1
(22) Date of filing: 19.10.2021
(51) Int. Cl.: H04L 12/28, H04W 28/24

(54) **DATA TRANSMISSION METHOD, DEVICE AND SYSTEM**

(30) Priority: 30.12.2020 CN 202011606407
(71) Applicant: Huawei Technologies Co., Ltd., Shenzhen, Guangdong 518129 (CN)
(72) Inventor: CHEN, Ying, Shenzhen, Guangdong 518129 (CN); PU, Yun, Shenzhen, Guangdong 518129 (CN)
(74) Representative: Huawei European IPR
(86) International application number: PCT/CN2021/124715
(87) International publication number: WO 2022/142600

(57) **Abstract**

This application discloses a data transmission method and device, and a system, and relates to the field of communication technologies. The method includes: A first fixed-line device first determines a target service level agreement SLA of data of a target user in a fixed-line network. Then, the first fixed-line device determines, based on a correspondence between an SLA of data and a slice template, a target slice template corresponding to the target SLA. Finally, the first fixed-line device transmits the data of the target user by using a slice instance of the target slice template. This application resolves a problem of relatively poor flexibility of data transmission in the fixed-line network. This application is applied to a fixed-line device.

## Description

This application claims priority to China Patent Application No. 202011606407.0, field on December 30, 2020 and entitled "DATA TRANSMISSION METHOD, DEVICE, AND SYSTEM", which is incorporated herein by reference in its entirety.

### TECHNICAL FIELD

This application relates to the field of communication technologies, and in particular, to a data transmission method, a device, and a system.

### BACKGROUND

With development of communication technologies, fixed-line networks gradually become a part of people's daily lives. The fixed-line network is a fixed network, and is different from a mobile network.

A user terminal may communicate with a server through a data channel formed by a plurality of fixed-line devices (network devices in the fixed-line network). Because performance of the fixed-line device cannot be changed once configured, performance of the data channel formed by the plurality of fixed-line devices cannot be changed, for example, a latency of the data channel is fixed.

However, various types of data of a user may have different requirements on performance of the data channel, but these types of data can be transmitted only through a data channel having fixed performance. Therefore, flexibility of data transmission in the fixed-line network is poor.

### SUMMARY

This application provides a data transmission method, a device, and a system, to resolve a problem of relatively poor flexibility of data transmission in a fixed-line network. The technical solutions are as follows:

According to a first aspect, a data transmission method is provided. The method includes: A first fixed-line device first determines a target service level agreement SLA of data of a target user in a fixed-line network. Then, the first fixed-line device determines, based on a correspondence between an SLA of data and a slice template, a target slice template corresponding to the target SLA. Finally, the first fixed-line device transmits the data of the target user by using a slice instance of the target slice template.

In the data transmission method provided in embodiments of this application, the first fixed-line device determines a corresponding target slice template based on the target SLA of the data of the target user, and transmits the data of the target user by using a slice instance of the target slice template. In this way, data of users of different SLAs is transmitted by using slice instances of different slice templates, so that the data of users of different SLAs is transmitted on different data channels. Therefore, flexibility of data transmission in a fixed-line network is improved.

In addition, the slice instance of the target slice template corresponding to the target SLA can reach the target SLA when data is transmitted. Therefore, transmit the data of the target user by using the slice instance of the target slice template, so that an SLA of the data of the target user can be ensured. According to the data transmission method provided in embodiments of this application, SLAs of various data can be ensured, and flexibility of data transmission can be improved.

Optionally, the slice instance of the target slice template may include an interface, or may not include an interface. When the slice instance of the target slice template does not include an interface, before transmitting the data of the target user by using the slice instance of the target slice template, the first fixed-line device further needs to configure an interface for the slice instance of the target slice template, for example, configure a user-side interface and a network-side interface for the slice instance. The user-side interface may be an interface connecting a slice instance to a user terminal, and the network-side interface may be an interface connecting the slice instance to a server.

After receiving the data of the target user sent by the user terminal in the fixed-line, the first fixed-line device may determine feature of the data, and then determine the target SLA based on the feature of the data.

In this way, the SLA carried in the data of the target user is the target SLA. It should be noted that the data of the target user carries an SLA, and the SLA is an SLA required by the data of the target user. After receiving the data of the target user, the first fixed-line device may collect an SLA carried in the data, and determine the SLA as the target SLA.

In addition, the SLA corresponding to a type of the data of the target user is the target SLA. Regardless of whether the data of the target user carries the SLA, after receiving the data of the target user, the first fixed-line device may identify the type of the data of the target user. Then, the first fixed-line device determines, based on a correspondence between a data type and an SLA, an SLA corresponding to the type of the data of the target user, and determines the SLA as the target SLA. It should be noted that a correspondence between a data type and an SLA may include multiple data types and multiple SLAs, and an SLA corresponding to each data type is an SLA required by data of the data type.

Optionally, before the first fixed-line device determines, based on the correspondence between an SLA of data and a slice template, the target slice template corresponding to the target SLA, the method further includes: The first fixed-line device determines, based on a correspondence between a user and an SLA, an SLA corresponding to the target user. Only when the target SLA is less than or equal to the SLA corresponding to the target user, the first fixed-line device determines, based on the correspondence between an SLA of data and a slice template, the target slice template corresponding to the target SLA. Each user created in the fixed-line device has a corresponding SLA. The SLA that the user data reaches during transmission cannot exceed the SLA corresponding to the user. When the target SLA is less than or equal to the SLA corresponding to the target user, it indicates that an SLA required by data of a current target user (or an SLA corresponding to a type of data of a target user) does not exceed the SLA corresponding to the target user. In this case, the first fixed-line device may select a corresponding target slice template for the data of the target user, so as to subsequently transmit the data of the target user based on the target slice template.

Optionally, when the target SLAis higher than the SLA corresponding to the target user, it indicates that the SLA required by the data of the current target user (or the SLA corresponding to the type of the data of the target user) exceeds the SLA corresponding to the target user. In this case, the first fixed-line device cannot screen a corresponding target slice template for the user data. For example, the first fixed-line device may not screen a slice template, but directly transmit the data of the target user; or the first fixed-line device may determine that, in a correspondence between an SLA and a slice template, the corresponding SLA is less than or equal to an auxiliary slice template of the SLA corresponding to the target user, and transmit the data of the target user based on the auxiliary slice template. In this way, it may be avoided that when the target SLA is higher than the SLA corresponding to the target user, the corresponding target slice template is screened for the data of the target user, so that the SLA for data transmission of the target user is higher than the SLA corresponding to the target user.

Optionally, after the first fixed-line device transmits the data of the target user by using the slice instance of the target slice template, the method further includes: When target duration reaches a duration threshold, the first fixed-line device forbids the data of the target user from being transmitted by using the slice instance of the target slice template, where the target duration is duration since the first fixed-line device stops using the slice instance of the target slice template to transmit the data of the target user. When the target duration reaches the duration threshold, the first fixed-line device may determine that the target user temporarily does not need to transmit data. Therefore, the first fixed-line device may unbind the target user from the slice instance of the target slice template, for example, may forbid the data of the target user from being transmitted by using the slice instance of the target slice template.

Optionally, the method further includes: The first fixed-line device deletes the slice instance of the target slice template when a target quantity is less than a quantity threshold, where the target quantity is a quantity of users corresponding to data transmitted by the first fixed-line device by using the slice instance of the target slice template. When the target quantity is less than the quantity threshold, it indicates that current utilization of the slice instance of the target slice template is relatively low. In this case, the first fixed-line device may delete the slice instance of the target slice template, to reduce load of the first fixed-line device. For example, the quantity threshold may be 1 or 2.

Optionally, the first fixed-line device is connected to a second fixed-line device, and the method further includes: After determining the target slice template, the first fixed-line device sends a first control message to the second fixed-line device, where the first control message indicates the second fixed-line device to transmit the data of the target user by using another slice instance of the target slice template. In embodiments of this application, a slice instance in the second fixed-line device is managed by the first fixed-line device. Therefore, when the first fixed-line device determines that the first fixed-line device needs to transmit the data of the target user by using the slice instance of the target slice template, the first fixed-line device may indicate the second fixed-line device to also transmit the data of the target user by using the slice instance of the target slice template.

Optionally, after the first fixed-line device sends the first control message to the second fixed-line device, the method further includes: The first fixed-line device sends a second control message to the second fixed-line device when the target duration reaches the duration threshold, where the target duration is the duration since the first fixed-line device stops using the slice instance of the target slice template to transmit the data of the target user, and the second control message indicates that the second fixed-line device is forbidden from transmitting the data of the target user by using the another slice instance of the target slice template. In embodiments of this application, the slice instance in the second fixed-line device is managed by the first fixed-line device. Therefore, when the first fixed-line device determines that the first fixed-line device needs to be forbidden from transmitting the data of the target user by using the slice instance of the target slice template, the first fixed-line device may indicate the second fixed-line device to also be forbidden from transmitting the data of the target user by using the slice instance of the target slice template.

Optionally, the method further includes: The first fixed-line device sends a third control message to the second fixed-line device when the target quantity is less than the quantity threshold, where the third control message indicates the second fixed-line device to delete the another slice instance of the target slice template, where the target quantity is the quantity of users corresponding to the data transmitted by the first fixed-line device by using the slice instance of the target slice template. In embodiments of this application, the slice instance in the second fixed-line device is managed by the first fixed-line device. Therefore, when the first fixed-line device determines that the first fixed-line device needs to delete the slice instance of the target slice template, the first fixed-line device may indicate the second fixed-line device to also delete the slice instance of the target slice template.

Optionally, the first fixed-line device is one of an optical line terminal OLT and an optical network terminal ONT, and the second fixed-line device is the other of the OLT and the ONT.

According to a second aspect, a data transmission method is provided, where the method includes: a first fixed-line device first determines a target service level agreement SLA of data of a target user in a fixed-line network; and then determines, based on a correspondence between an SLA of data and a slice template, a target slice template corresponding to the target SLA. Finally, the first fixed-line device sends a first control message to a second fixed-line device, the first control message indicates the second fixed-line device to transmit the data of the target user by using a slice instance of the target slice template.

In this way, the SLA carried in the data of the target user is the target SLA.

In addition, the SLA corresponding to a type of the data of the target user is the target SLA.

Optionally, before the first fixed-line device determines, based on the correspondence between an SLA of data and a slice template, the target slice template corresponding to the target SLA, the method further includes: The first fixed-line device determines, based on a correspondence between a user and an SLA, an SLA corresponding to the target user. Only when the target SLA is less than or equal to the SLA corresponding to the target user, the first fixed-line device determines, based on the correspondence between an SLA of data and a slice template, the target slice template corresponding to the target SLA.

Optionally, after the first fixed-line device sends the first control message to the second fixed-line device, the method further includes: The first fixed-line device sends a second control message to the second fixed-line device when target duration reaches a duration threshold, where the target duration is duration since the second fixed-line device stops using the slice instance of the target slice template to transmit the data of the target user, and the second control message indicates that the second fixed-line device is forbidden from transmitting the data of the target user by using the slice instance of the target slice template.

Optionally, before the first fixed-line device sends the second control message to the second fixed-line device, the method further includes: The first fixed-line device receives a duration message sent by the second fixed-line device, where the duration message indicates that the target duration reaches the duration threshold. The first fixed-line device determines, based on the duration message, that the target duration reaches the duration threshold. When transmitting the data of the target user by using the slice instance of the target slice template, the second fixed-line device needs to detect the target duration. When the target duration reaches the duration threshold, the second fixed-line device may determine that the target user temporarily does not need to transmit data. Therefore, the second fixed-line device may send the duration message to the first fixed-line device, so that the first fixed-line device indicates, based on the duration message, that the second fixed-line device is forbidden from transmitting the data of the target user by using the slice instance of the target slice template.

Optionally, the method further includes: The first fixed-line device sends a third control message to the second fixed-line device when a target quantity is less than a quantity threshold, where the third control message indicates the second fixed-line device to delete a slice instance of the target slice template, where the target quantity is a quantity of users corresponding to data transmitted by the second fixed-line device by using the slice instance of the target slice template.

Optionally, the first fixed-line device is a controller, and the second fixed-line device is an OLT or an ONT.

According to a third aspect, a data transmission method is provided. The method includes: A second fixed-line device receives a first control message sent by a first fixed-line device. Then, the second fixed-line device transmits data of a target user based on the first control message by using a slice instance of a target slice template.

Optionally, after the second fixed-line device transmits the data of the target user based on the first control message by using the slice instance of the target slice template, the method further includes: The second fixed-line device receives a second control message sent by the first fixed-line device. Then, the second fixed-line device forbids, based on the second control message, the data of the target user from being transmitted by using the slice instance of the target slice template.

Optionally, before the second fixed-line device receives the second control message sent by the first fixed-line device, the method further includes: The second fixed-line device sends a duration message to the first fixed-line device when target duration reaches a duration threshold, where the duration message indicates that the target duration reaches the duration threshold, where the target duration is duration since the second fixed-line device stops using the slice instance of the target slice template to transmit the data of the target user.

Optionally, the method further includes: The second fixed-line device receives a third control message sent by the first fixed-line device. The second fixed-line device deletes the slice instance of the target slice template based on the third control message.

Optionally, the first fixed-line device is a controller, and the second fixed-line device is an OLT or an ONT; or the first fixed-line device is one of the OLT and the ONT, and the second fixed-line device is the other of the OLT and the ONT.

According to a fourth aspect, a fixed-line device is provided. The fixed-line device includes modules configured to perform any data transmission method provided in the first aspect.

According to a fifth aspect, a fixed-line device is provided. The fixed-line device includes modules configured to perform any data transmission method provided in the second aspect.

According to a sixth aspect, a fixed-line device is provided. The fixed-line device includes modules configured to perform any data transmission method provided in the third aspect.

According to a seventh aspect, a fixed-line device is provided. The fixed-line device includes a processor and a memory. The processor is configured to execute a program stored in the memory, to implement any data transmission method provided in the first aspect, the second aspect, and the third aspect.

According to an eighth aspect, a fixed-line communication system is provided. The fixed-line communication system includes a first fixed-line device, and the first fixed-line device is any data transmission device provided in the fourth aspect or the fifth aspect.

Optionally, the fixed-line communication system further includes a second fixed-line device, where the second fixed-line device is any data transmission device provided in the sixth aspect.

According to a ninth aspect, a computer-readable storage medium is provided. The computer-readable storage medium stores instructions, and when the instructions are run on a computer, the computer is enabled to perform any data transmission method provided in the first aspect, the second aspect, or the third aspect.

According to a tenth aspect, a computer program product including instructions is provided. When the computer program product is run on a computer, the computer is enabled to perform any data transmission method provided in the first aspect, the second aspect, or the third aspect.

For effects of the corresponding solutions in the first aspect to the tenth aspect, refer to each other. Details are not described in this application.

### BRIEF DESCRIPTION OF DRAWINGS

FIG. 1 is a schematic diagram of a structure of a fixed-line communication system according to an embodiment of this application;
FIG. 2 is a schematic diagram of a structure of another fixed-line communication system according to an embodiment of this application;
FIG. 3 is a schematic diagram of a structure of a fixed-line device according to an embodiment of this application;
FIG. 4 is a flowchart of a data transmission method according to an embodiment of this application;
FIG. 5 is a schematic diagram of a transmission path according to an embodiment of this application;
FIG. 6A and FIG. 6B are a flowchart of another data transmission method according to an embodiment of this application;
FIG. 7A and FIG. 7B are a flowchart of another data transmission method according to an embodiment of this application;
FIG. 8 is a schematic diagram of a structure of a data transmission device according to an embodiment of this application;
FIG. 9 is a schematic diagram of a structure of another data transmission device according to an embodiment of this application; and
FIG. 10 is a schematic diagram of a structure of another data transmission device according to an embodiment of this application.

### DESCRIPTION OF EMBODIMENTS

To make principles and technical solutions of this application clearer, the following further describes implementations of this application in detail with reference to the accompanying drawings.

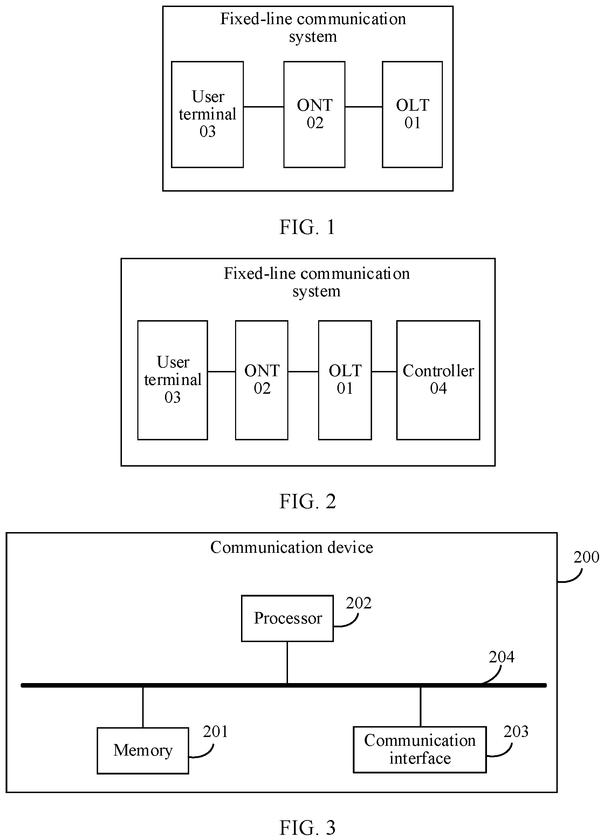

FIG. 1 is a schematic diagram of a structure of a fixed-line communication system according to an embodiment of this application. As shown in FIG. 1, the fixed-line communication system may be a fixed-line communication system. The fixed-line communication system includes a plurality of fixed-line devices, for example, an optical line terminal (optical line terminal, OLT) 01 and an optical network terminal (optical network terminal, ONT) 02 in FIG. 1.

Optionally, a fixed-line device other than the OLT and the ONT may further exist in the fixed-line communication system. This is not limited in this embodiment of this application. For example, as shown in FIG. 1, the fixed-line communication system may further include a user terminal 03 and a server (not shown in FIG. 1). The user terminal 03 is connected to the server through an ONT 01 and an OLT 02 sequentially. The fixed-line communication system may further include a broadband network service gateway (broadband network gateway, BNG) (not shown in FIG. 1), and the OLT 02 and the server may be connected through a BNG.

FIG. 2 is a schematic diagram of a structure of another fixed-line communication system according to an embodiment of this application. As shown in FIG. 2, based on the fixed-line communication system shown in FIG. 1, the fixed-line communication system may further include a controller 04. The controller 04 may be connected to the OLT 01 or the ONT 02. In FIG. 2, use the controller 04 being connected to the OLT 01 as an example. The controller 04 may be any controller, for example, a software-defined networking (software-defined networking, SDN) controller.

The fixed-line device in the fixed-line communication system may include a processor. The processor is configured to: after being coupled to the memory and reading instructions in the memory, perform, according to the instructions, the method performed by the fixed-line device described in embodiments of this application. There may be a plurality of processors, and the memory coupled to the processor may be independent of the processor or the fixed-line device, or may be in the processor or the fixed-line device. The memory may be a physically independent unit, or may be a storage space, a web disk, or the like on a cloud server. Optionally, there may be one or more memories. When there are a plurality of memories, the plurality of memories may be located at a same location or different locations, and may be used independently or in cooperation. For example, when the memory is located inside the fixed-line device, FIG. 3 is a schematic diagram of a structure of a fixed-line device according to an embodiment of this application. The fixed-line device 200 includes a processor 202 and a memory 201. The memory 201 is configured to store a program, and the processor 202 is configured to call the program stored in the memory 201, such that the fixed-line device performs a corresponding method or function. Optionally, as shown in FIG. 2, the fixed-line device 200 may further include at least one communication interface 203 and at least one communication bus 204. The memory 201, the processor 202, and the communication interface 203 are connected through the communication bus 204. The communication interface 203 is configured to communicate with another device under control of the processor 202, and the processor 202 may call, by using the communication bus 204, the program stored in the memory 201.

In a fixed-line communication system, the user terminal 03 may communicate with the server through a data channel formed by fixed-line devices (such as an OLT and an ONT). Different data of the user that needs to be transmitted by the user terminal 03 has different requirements on performance of the data channel. However, once the performance of the fixed-line device is configured, the performance cannot be changed. Therefore, different data of the user can be transmitted only through a data channel with fixed performance. For example, in data of a user, one type of data requires a delay of less than 20 milliseconds, and the other type of data requires a delay of less than 80 milliseconds. In a fixed-line communication system, the two types of data are transmitted by using a same data channel. It can be learned that flexibility of data transmission in a fixed-line is relatively poor.

Embodiments of this application provides a data transmission method. In the data transmission method, a corresponding slice instance can be used in a fixed-line device to transmit data based on a service level agreement (Service Level Agreement, SLA) of data, thereby resolving a problem of relatively poor flexibility of data transmission in a fixed-line network.

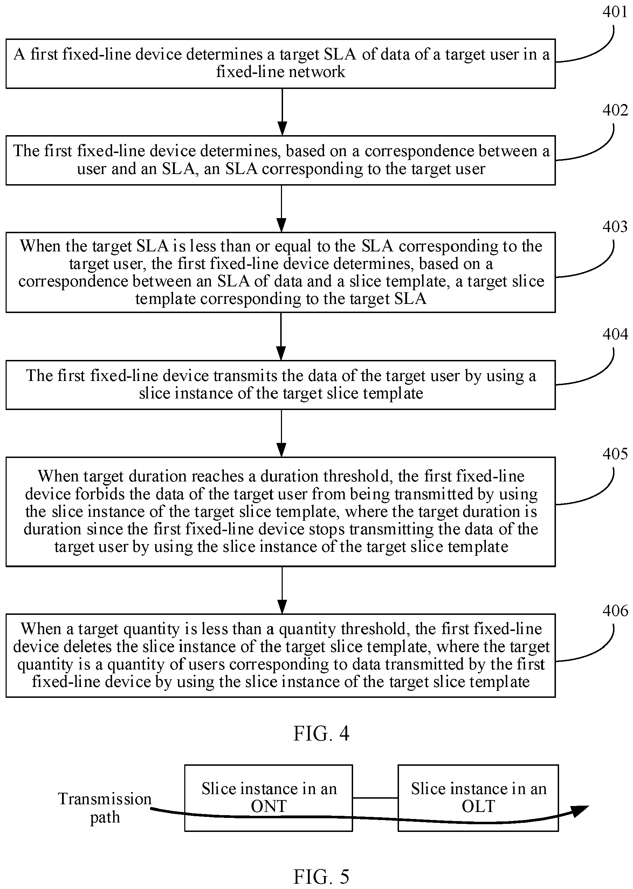

For example, FIG. 4 is a flowchart of a data transmission method according to an embodiment of this application. The data transmission method may be used in a first fixed-line device, and the first fixed-line device may be the OLT 01 or the ONT 02 in the fixed-line communication system shown in FIG. 1 or FIG. 2. As shown in FIG. 4, the data transmission method may include the following steps.

Step 401: A first fixed-line device determines a target SLA of data of a target user in a fixed-line network.

After receiving the data of the target user sent by the user terminal in the fixed-line, the first fixed-line device may determine feature of the data, and then determine the target SLA based on the feature of the data.

In this way, the SLA carried in the data of the target user is the target SLA. The data of the target user carries an SLA, and the SLA is an SLA required by the data of the target user. After receiving the data of the target user, the first fixed-line device may collect an SLA carried in the data, and determine the SLA as the target SLA.

In addition, the SLA corresponding to a type of the data of the target user is the target SLA. Regardless of whether the data of the target user carries the SLA, after receiving the data of the target user, the first fixed-line device may identify the type of the data of the target user. Then, the first fixed-line device determines, according to a correspondence between a data type and an SLA, an SLA corresponding to the type of the data of the target user, and determines the SLA as the target SLA. It should be noted that a correspondence between a data type and an SLA may include multiple data types and multiple SLAs, and an SLA corresponding to each data type is an SLA required by data of the data type.

Optionally, when identifying the type of the data of the target user, the first fixed-line device may use an artificial intelligence (artificial intelligence, AI) module to perform identification. Optionally, the type of the data of the target user may be related to an application (or an application type), and types of data of different applications are different.

Step 402: The first fixed-line device determines, based on a correspondence between a user and an SLA, an SLA corresponding to the target user.

Each user created in the fixed-line device has a corresponding SLA. The SLA that the user data reaches during transmission cannot exceed the SLA corresponding to the user.

After receiving data of the target user, the first fixed-line device further needs to determine an SLA corresponding to the target user. For example, the data of the target user carries an identifier of the target user, and the first fixed-line device may determine the target user and the SLA corresponding to the target user based on the identifier of the target user.

Step 403: When the target SLA is less than or equal to the SLA corresponding to the target user, the first fixed-line device determines, based on a correspondence between an SLA of data and a slice template, a target slice template corresponding to the target SLA.

After determining the target SLA and the SLA corresponding to the target user, the first fixed-line device may determine whether the target SLA is higher than the SLA corresponding to the target user. When the target SLA is less than or equal to the SLA corresponding to the target user, it indicates that an SLA required by data of a current target user (or an SLA corresponding to a type of data of a target user) does not exceed the SLA corresponding to the target user. In this case, the first fixed-line device may screen a corresponding target slice template for the data of the target user, so as to subsequently transmit the data of the target user based on the target slice template.

In a correspondence between an SLA of data and a slice template, when data is transmitted, a slice instance of each slice template can reach an SLA corresponding to the slice template. Therefore, when the first fixed-line device determines, based on the correspondence between an SLA of data and a slice template, the slice instance of the target slice template corresponding to the target SLA during data transmission, the target SLA can be reached. Therefore, the slice instance of the target slice template can satisfy the SLA requirement of the data of the target user.

The slice template includes information required for creating a slice instance, and the slice instance can be created in the fixed-line device based on the slice template. The slice instance includes a resource used to transmit data and information related to a data transmission manner. For example, the slice instance includes a forwarding resource (for example, a traffic management (Traffic Management, TM) resource), an interface resource, an enqueue priority of data on an interface, a resource unit reservation manner (for example, exclusive or shared), and the like.

It should be noted that when the target SLA is higher than the SLA corresponding to the target user, it indicates that an SLA required by the data of the current target user (or the SLA corresponding to the type of the data of the target user) exceeds the SLA corresponding to the target user. In this case, the first fixed-line device cannot screen the corresponding target slice template for the user data. For example, the first fixed-line device may not screen a slice template, but directly transmit the data of the target user; or the first fixed-line device may determine that, in a correspondence between an SLA and a slice template, the corresponding SLA is less than or equal to an auxiliary slice template of the SLA corresponding to the target user, and transmit the data of the target user based on the auxiliary slice template. In this way, it may be avoided that when the target SLA is higher than the SLA corresponding to the target user, the corresponding target slice template is screened for the data of the target user, so that the SLA for data transmission of the target user is higher than the SLA corresponding to the target user.

For example, it is assumed that a correspondence between an SLA of data and a slice template is shown in table 1. If the target SLA is an SLA 1, and the SLA corresponding to the target user is the SLA 1, the first fixed-line device may determine that the target SLA is equal to the SLA corresponding to the target user, and the first fixed-line device may determine, based on the correspondence between an SLA of data and a slice template, that the target slice template corresponding to the target SLA is a slice template A. If the target SLA is the SLA 1, and the SLA corresponding to the target user is an SLA 2, the first fixed-line device may determine that the target SLA is higher than the SLA corresponding to the target user, and the first fixed-line device may directly transmit the data of the target user without screening the slice template. Alternatively, the first fixed-line device may determine, based on the correspondence between an SLA of data and a slice template, that the auxiliary slice template is a slice template B.

**Table 1**

| SLA | Slice template |
|---|---|
| 1 | A |
| 2 | B |
| 3 | C |

Optionally, when the target SLAis higher than the SLA corresponding to the target user, if the fixed-line communication system includes a controller, the first fixed-line device may further send an alarm message to the controller, where the alarm message is used for indicating that the target SLA is higher than the SLA corresponding to the target user.

Step 404: The first fixed-line device transmits the data of the target user by using a slice instance of the target slice template.

After determining the target slice template, the first fixed-line device may detect whether the slice instance of the target slice template is created. If the slice instance is created, the first fixed-line device may directly use the slice instance to transmit the data of the target user. If the slice instance is not created, the first fixed-line device may create the slice instance based on the target slice template, and then transmit the data of the target user by using the slice instance.

When the slice instance of the target slice template transmits the data of the target user, the target SLA corresponding to the target slice template can be reached, and a requirement of the data of the target user for the SLAis the target SLA. Therefore, the first fixed-line device transmits the data of the target user by using the slice instance of the target slice template, such that the requirement of the data of the target user for the SLA can be satisfied.

Optionally, the slice instance of the target slice template may include an interface, or may not include an interface. When the slice instance of the target slice template does not include an interface, before transmitting the data of the target user by using the slice instance of the target slice template, the first fixed-line device further needs to configure an interface for the slice instance of the target slice template, for example, configure a user-side interface and a network-side interface for the slice instance. The user-side interface may be an interface connecting a slice instance to a user terminal, and the network-side interface may be an interface connecting the slice instance to a server.

For example, the first fixed-line device may collect a quintuple in the data of the target user, and configure the user-side interface and the network-side interface based on the quintuple. The quintuple includes: a source Internet Protocol (Internet Protocol, IP) address, a source port, a destination IP address, a destination port, and a transport layer protocol.

When the first fixed-line device is an OLT, the network-side interface of the first fixed-line device is an uplink interface (for example, an interface from the OLT to a BNG), and the user-side interface is a GEMPORT (a GEM-based (a GPON packaging) logical port) or a logical link identifier (Logical Link Identifier, LLID) interface, where the GPON is a passive optical network technology; when the first fixed-line device is an ONT, the network-side interface of the first fixed-line device is a GEMPORT or an LLID, and the user-side interface is a wireless network (Wireless Local Area Network, WLAN) interface or Ethernet interface. The uplink interface is a logical interface, including a Layer 2 virtual local area network (Virtual Local Area Network, VLAN) interface, a Layer 3 routing interface, a tunnel, or the like. The tunnel may be a virtual extensible local area network (Virtual Extensible Local Area Network, VXLAN) tunnel, an SRv6 (segment routing based on Internet Protocol version 6) tunnel, or the like. The uplink interface may also be a physical interface, for example, an Ethernet interface, a flexible Ethernet (Flexible Ethernet, Flex-E) interface, or an optical transport network (optical transport network, OTN) interface.

It should be noted that if the first fixed-line device determines an auxiliary slice template in step 403, in step 404, the first fixed-line device may transmit the data of the target user by using the slice instance of the auxiliary slice template.

Step 405: When target duration reaches a duration threshold, the first fixed-line device forbids the data of the target user from being transmitted by using the slice instance of the target slice template, where the target duration is duration since the first fixed-line device stops using the slice instance of the target slice template to transmit the data of the target user.

When transmitting the data of the target user by using the slice instance of the target slice template, the first fixed-line device needs to detect the target duration. When the target duration reaches the duration threshold, the first fixed-line device may determine that the target user temporarily does not need to transmit data. Therefore, the first fixed-line device may unbind the target user from the slice instance of the target slice template, for example, may forbid the data of the target user from being transmitted by using the slice instance of the target slice template.

It should be noted that, if the first fixed-line device determines the auxiliary slice template in step 403, in step 405, the first fixed-line device may detect duration since the data of the target user stops being transmitted by using the slice instance of the auxiliary slice template, and when the duration reaches a duration threshold, forbid the data of the target user from being transmitted by using the slice instance of the auxiliary slice template.

Step 406: When a target quantity is less than a quantity threshold, the first fixed-line device deletes the slice instance of the target slice template, where the target quantity is a quantity of users corresponding to data transmitted by the first fixed-line device by using the slice instance of the target slice template.

The first fixed-line device may count a quantity of users corresponding to data transmitted by using each slice instance. For example, after the first fixed-line device creates the slice instance of the target slice template, if the slice instance of the target slice template is used to transmit the data of the target user, the first fixed-line device may determine that the quantity of users corresponding to the data transmitted by using the slice instance of the target slice template is 1. Then, if data of another user is also transmitted by using the slice instance of the target slice template, the first fixed-line device may correspondingly increase the quantity of users corresponding to the data transmitted by using by the slice instance of the target slice template. For example, it is assumed that the slice instance of the target slice template is configured to transmit data of a user 1, a user 2, and a user 3. In this case, the quantity of users corresponding to the data that is used by the slice instance of the target slice template to transmit is 3.

When the target quantity is less than the quantity threshold, it indicates that current utilization of the slice instance of the target slice template is relatively low. In this case, the first fixed-line device may delete the slice instance of the target slice template, to reduce load of the first fixed-line device. For example, the quantity threshold may be 1, 2, or the like.

It should be noted that, if the first fixed-line device determines an auxiliary slice template in step 403, in step 406, the first fixed-line device may detect the quantity of users corresponding to data transmitted by using the slice instance of the auxiliary slice template, and delete the slice instance of the auxiliary slice template when the quantity of users reaches a duration threshold.

In conclusion, in the data transmission method provided in embodiments of this application, the first fixed-line device determines a corresponding target slice template based on a target SLA of the data of the target user, and transmits the data of the target user by using the slice instance of the target slice template. In this way, data of users of different SLAs is transmitted by using slice instances of different slice templates, so that the data of users of different SLAs is transmitted on different data channels. Therefore, flexibility of data transmission in a fixed-line is improved.

In addition, the slice instance of the target slice template corresponding to the target SLA can reach the target SLA when data is transmitted. Therefore, transmit the data of the target user by using the slice instance of the target slice template, so that an SLA of the data of the target user can be ensured. According to the data transmission method provided in embodiments of this application, SLAs of various data can be ensured, and flexibility of data transmission can be improved.

In the foregoing embodiments, both the OLT and the ONT may be the first fixed-line device. In this way, when both the OLT and the ONT use the data transmission method shown in FIG. 4 to transmit the data of the target user, as shown in FIG. 5, it is equivalent that the data of the target user has a transmission path in the fixed-line communication system, and the transmission path sequentially passes through a slice instance in the ONT and a slice instance in the OLT.

For each of the OLT and the ONT, the other of the OLT and the ONT may be referred to as a second fixed-line device.

Optionally, after determining the target slice template, the first fixed-line device may send a first notification message to the second fixed-line device, where the first notification message notifies the first fixed-line device to transmit the data of the target user by using the slice instance of the target slice template.

Optionally, when forbidding the data of the target user from being transmitted by using the slice instance of the target slice template, the first fixed-line device may send a second notification message to the second fixed-line device, where the second notification message notifies the first fixed-line device to forbid the data of the target user from being transmitted by using the slice instance of the target slice template.

Optionally, when deleting the slice instance of the target slice template, the first fixed-line device may send a third notification message to the second fixed-line device, where the third notification message notifies the first fixed-line device to delete the slice instance of the target slice template.

In a process of performing the data transmission method shown in FIG. 3, each of the OLT and the ONT may further send these notification messages to the other, so that each of the OLT and the ONT performs unified operations based on the notification messages sent by the other.

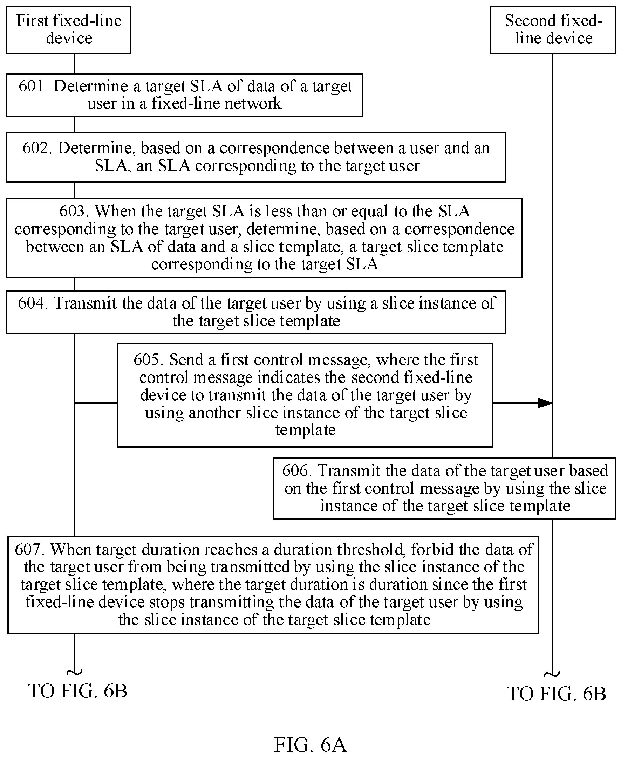

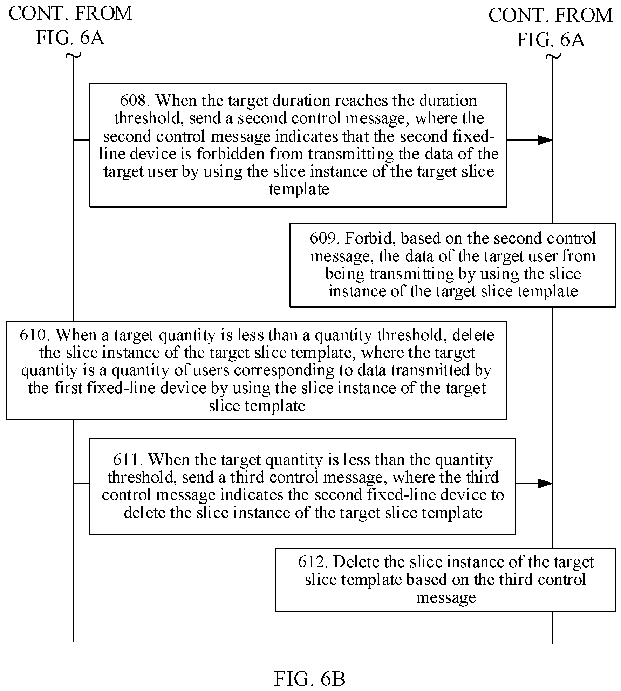

When the first fixed-line device is one of the OLT and the ONT, and the other of the OLT and the ONT is not the first fixed-line device, the other device is referred to as a second fixed-line device, and the first fixed-line device is connected to the second fixed-line device. Embodiments of this application provides another data transmission method. The data transmission method may be applied to the fixed-line communication system shown in FIG. 1 or FIG. 2. As shown in FIG. 6Aand FIG. 6B, the data transmission method may include the following steps.

Step 601: The first fixed-line device determines a target SLA of data of a target user in a fixed-line network.

For Step 601, refer to step 401. Details are not described in embodiments of this application.

Optionally, when the first fixed-line device determines the target SLA based on the type of the data of the target user and a correspondence between a data type and an SLA in step 601, the first fixed-line device needs to determine the type of the data of the target user. For example, when determining the type of the data of the target user, the first fixed-line device may determine the first type of the data of the target user, receive a second type of the data of the target user that is determined by the second fixed-line device, and then determine the type of the data of the target user according to the first type and the second type. In this case, the second fixed-line device needs to determine the second type of the data of the target user, and send the second type to the first fixed-line device.

Step 602: The first fixed-line device determines, based on a correspondence between a user and an SLA, an SLA corresponding to the target user.

For, step 602, refer to step 402. Details are not described in embodiments of this application.

Step 603: When the target SLA is less than or equal to the SLA corresponding to the target user, the first fixed-line device determines, based on a correspondence between an SLA of data and a slice template, a target slice template corresponding to the target SLA.

For step 603, refer to step 403. Details are not described in embodiments of this application.

Step 604: The first fixed-line device transmits the data of the target user by using a slice instance of the target slice template.

For step 604, refer to step 404. Details are not described in embodiments of this application.

Step 605: The first fixed-line device sends a first control message to the second fixed-line device, where the first control message indicates the second fixed-line device to transmit the data of the target user by using another slice instance of the target slice template.

It should be noted that the slice instance used by the first fixed-line device in step 604 belongs to the first fixed-line device, and the slice instance used by the second fixed-line device indicated by the first control message in step 605 belongs to the second fixed-line device. The two slice instances are slice instances of the target slice template, but the two slice instances are different.

In embodiments of this application, the first fixed-line device manages slice instances in both the first fixed-line device and the second fixed-line device. The first fixed-line device can determine a slice instance used by the first fixed-line device to transmit the data of the target user, and indicate the second fixed-line device to transmit the data of the target user by using one slice instance.

Step 606: The second fixed-line device transmits data of the target user based on the first control message by using the slice instance of the target slice template.

For example, the first control message may include the target slice template and an identifier of the target user. The second fixed-line device may determine the slice instance of the target slice template based on the target slice template (for example, search for the slice instance or create the slice instance), and then transmit the data of the target user based on the slice instance.

For another example, the first control message may include an identifier of the target slice template and the identifier of the target user. The second fixed-line device may store a plurality of slice templates. The second fixed-line device may search the target slice template in the plurality of slice templates based on the identifier of the target slice template, and determine the slice instance of the target slice template based on the target slice template, then transmit the data of the target user by using the slice instance.

For another example, the first control message may include slice instance information of the target slice template in the second fixed-line device and the identifier of the target user. The second fixed-line device may directly transmit the data of the target user by using the slice instance based on the slice instance information.

It can be learned that in embodiments of this application, the first fixed-line device may manage a slice instance in the first fixed-line device (for example, create a slice instance, and transmit the data of the target user by using the slice instance), and a slice instance in the second fixed-line device. The second fixed-line device may transmit data by using the slice instance of the target slice template under control of the first fixed-line device.

Optionally, when the slice instance does not include an interface, the second fixed-line device may further configure an interface for the slice instance of the target slice template, or the first fixed-line device may further determine an interface for the slice instance of the target slice template in the second fixed-line device, and indicate the second fixed-line device to configure the interface. For a process of the second fixed-line device configuring the interface of the slice instance of the target slice template, can refer to the process of the first fixed-line device configuring the interface of the slice instance of the target slice template. Details are not described in embodiments of this application.

Step 607: When target duration reaches a duration threshold, the first fixed-line device forbids the data of the target user from being transmitted by using the slice instance of the target slice template, where the target duration is duration since the first fixed-line device stops using the slice instance of the target slice template to transmit the data of the target user.

The slice instance of the target slice template that the first fixed-line device is forbidden from using in step 607 is the slice instance of the target slice template used by the first fixed-line device in step 604.

For step 607, refer to step 405. Details are not described in embodiments of this application.

Step 608: When the target duration reaches the duration threshold, the first fixed-line device sends a second control message to the second fixed-line device, where the second control message indicates that the second fixed-line device is forbidden from transmitting the data of the target user by using the slice instance of the target slice template.

In step 608, the slice instance of the target slice template that is indicated by the first fixed-line device and that the second fixed network device is forbidden from using is the slice instance of the target slice template that the first fixed-line device indicates the second fixed-line device to use in step 605.

Duration since the first fixed-line device stops using the slice instance of the target slice template to transmit the data of the target user, and the target duration is the same as the duration since the second fixed-line device stops using the slice instance of the target slice template to transmit the data of the target user stops using the slice instance of the target slice template to transmit the data of the target user. Therefore, when duration since the first fixed-line device stops using the slice instance of the target slice template to transmit the data of the target user reaches the duration threshold, the first fixed-line device may determine that duration since the second fixed-line device stops using the slice instance of the target slice template to transmit the data of the target user also reaches the duration threshold. In this case, the first fixed-line device may send the second control message to the second fixed-line device, to indicate that the second fixed-line device is forbidden from transmitting the data of the target user by using the slice instance of the target slice template.

It can be learned that in embodiments of this application, the slice instance in the second fixed-line device is managed by the first fixed-line device. Therefore, when the first fixed-line device determines that the first fixed-line device needs to be forbidden from transmitting the data of the target user by using the slice instance of the target slice template, the first fixed-line device may indicate the second fixed-line device to also be forbidden from transmitting the data of the target user by using the slice instance of the target slice template.

Step 609: The second fixed-line device forbids, based on the second control message, the data of the target user from being transmitting by using the slice instance of the target slice template.

The slice instance of the target slice template that the second fixed-line device is forbidden from using in step 609 is the slice instance of the target slice template that is used by the second fixed-line device in step 606.

Step 610: When a target quantity is less than a quantity threshold, the first fixed-line device deletes the slice instance of the target slice template, where the target quantity is a quantity of users corresponding to data transmitted by the first fixed-line device by using the slice instance of the target slice template.

The slice instance of the target slice template that needs to be deleted by the first fixed-line device in step 610 is the slice instance of the target slice template used by the first fixed-line device in step 604.

For step 610, refer to step 406. Details are not described in embodiments of this application.

Step 611: When the target quantity is less than the quantity threshold, the first fixed-line device sends a third control message to the second fixed-line device, where the third control message indicates the second fixed-line device to delete the slice instance of the target slice template.

The slice instance of the target slice template that the first fixed-line device indicates the second fixed-line device to delete in step 611 is the slice instance of the target slice template that the first fixed-line device indicates the second fixed-line device to use in step 605.

A quantity of users corresponding to data transmitted by the first fixed-line device by using the slice instance of the target slice template is the target quantity. The target quantity is the same as the quantity of users corresponding to the data transmitted by the second fixed-line device by using the slice instance of the target slice template. Therefore, when the quantity of users corresponding to the data transmitted by the first fixed-line device by using the slice instance of the target slice template is less than the quantity threshold, the first fixed-line device may determine that the quantity of users corresponding to the data transmitted by the second fixed-line device by using the slice instance of the target slice template is also less than the quantity threshold. In this case, the first fixed-line device may send the third control message to the second fixed-line device, to indicate the second fixed-line device to also delete the slice instance of the target slice template.

It can be learned that in embodiments of this application, the slice instance in the second fixed-line device is managed by the first fixed-line device. Therefore, when the first fixed-line device determines that the first fixed-line device needs to delete the slice instance of the target slice template in the first fixed-line device, the first fixed-line device may indicate the second fixed-line device to also delete the slice instance of the target slice template in the second fixed-line device.

Step 612: The second fixed-line device deletes the slice instance of the target slice template based on the third control message.

Optionally, the messages (such as the first control message, the second control message, and the third control message) sent by the first fixed-line device to the second fixed-line device may all be optical network unit management control interface (Optical Network Unit Management and Control Interface, OMCI) messages.

In conclusion, in the data transmission method provided in embodiments of this application, the first fixed-line device, based on a target SLA of the data of the target user, determines a corresponding target slice template, transmits the data of the target user by using the slice instance of the target slice template, and controls the second fixed-line device to also transmit the data of the target user by using the slice instance of the target slice template. In this way, data of users of different SLAs is transmitted by using slice instances of different slice templates, so that the data of users of different SLAs is transmitted on different data channels. Therefore, flexibility of data transmission in a fixed-line is improved.

In addition, when data is transmitted, the slice instance of the target slice template corresponding to the target SLA can reach the target SLA. Therefore, transmit the data of the target user by using the slice instance of the target slice template, so that an SLA of the data of the target user can be ensured. According to the data transmission method provided in embodiments of this application, SLAs of various types of data can be ensured, and flexibility of data transmission can be improved.

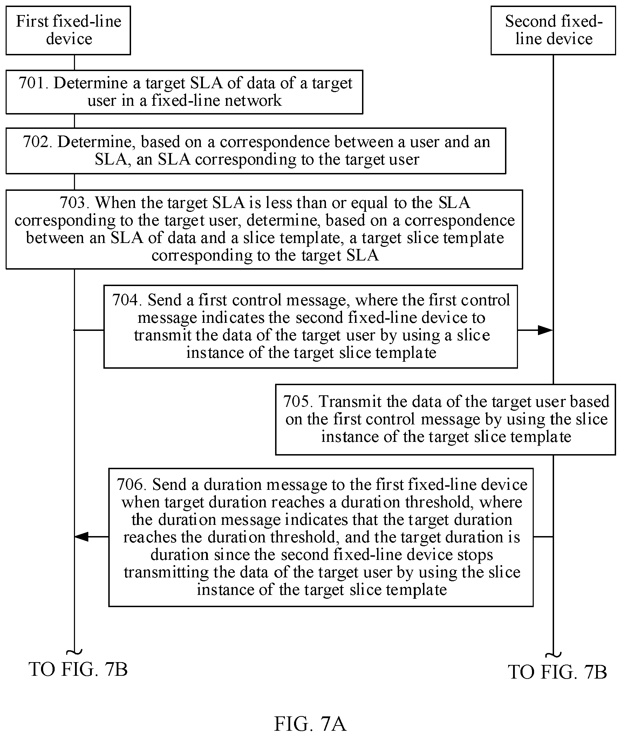

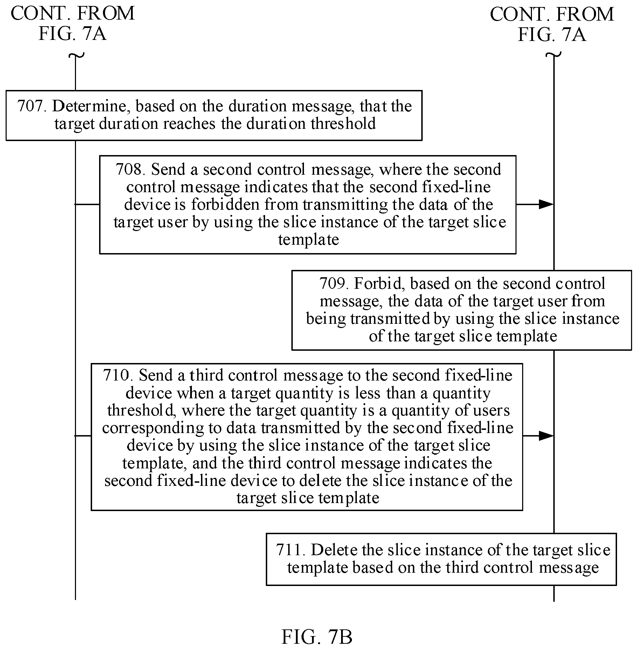

Based on the fixed-line communication system shown in FIG. 2, an embodiment of this application provides another data transmission method. The data transmission method is related to a first fixed-line device and a second fixed-line device in the fixed-line communication system shown in FIG. 2. The first fixed-line device is connected to the second fixed-line device, the first fixed-line device may be a controller 04, and the second fixed-line device may be an OLT 01 or an ONT 02. As shown in FIG. 7A and FIG. 7B, the data transmission method may include the following steps.

Step 701: The first fixed-line device determines a target SLA of data of a target user in a fixed-line network.

For step 701, refer to step 401. Details are not described in embodiments of this application.

When the first fixed-line device is a controller, if the data of the target user carries the SLA, the second fixed-line device may send the SLA to the controller, so that the controller determines the target SLA based on the SLA. Alternatively, regardless of whether the data of the target user carries the SLA, the second fixed-line device may identify a type of the data of the target user, and then the second fixed-line device may send an identified type to the controller, so that the controller determines the target SLA based on the type and a correspondence between a data type and an SLA.

Step 702: The first fixed-line device determines, based on a correspondence between a user and an SLA, an SLA corresponding to a target user.

For step 702, refer to step 402. Details are not described in embodiments of this application.

Step 703: When the target SLA is less than or equal to the SLA corresponding to the target user, the first fixed-line device determines, based on a correspondence between an SLA of data and a slice template, a target slice template corresponding to the target SLA.

For step 703, refer to step 403. Details are not described in embodiments of this application.

Step 704: The first fixed-line device sends a first control message to the second fixed-line device, where the first control message indicates the second fixed-line device to transmit data of the target user by using a slice instance of the target slice template.

Step 705: The second fixed-line device transmits the data of the target user based on the first control message by using the slice instance of the target slice template.

For step 704, refer to step 605. For step 705, refer to step 606. Details are not described in embodiments of this application.

When the first fixed-line device is a controller, if the slice instance does not include an interface, the second fixed-line device further needs to configure an interface for the slice instance of the target slice template. For a process for the second fixed-line device configuring the interface for the slice instance of the target slice template, refer to the process for the first fixed-line device configuring the interface for the slice instance of the target slice template. Details are not described in this embodiment of this application.

Alternatively, when the first fixed-line device is a controller, if the slice instance does not include an interface, the controller may further determine an interface of the slice instance of the target slice template in the second fixed-line device, and indicate the second fixed-line device to configure the interface. Optionally, the second fixed-line device may send a quintuple in the data of the target user to the controller, so that the controller determines, based on the quintuple, the interface of the slice instance of the target slice template in the second fixed-line device.

Step 706: The second fixed network device sends a duration message to the first fixed-line device when target duration reaches a duration threshold, where the duration message indicates that the target duration reaches the duration threshold, and the target duration is duration since the second fixed-line device stops using the slice instance of the target slice template to transmit the data of the target user.

When transmitting the data of the target user by using the slice instance of the target slice template, the second fixed-line device needs to detect the target duration. When the target duration reaches the duration threshold, the second fixed-line device may determine that the target user temporarily does not need to transmit data. Therefore, the second fixed-line device may send the duration message to the first fixed-line device, so that the first fixed-line device indicates, based on the duration message, that the second fixed-line device is forbidden from transmitting the data of the target user by using the slice instance of the target slice template.

Step 707: The first fixed network device determines, based on the duration message, that the target duration reaches the duration threshold.

Step 708: The first fixed-line device sends a second control message to the second fixed-line device, where the second control message indicates that the second fixed-line device is forbidden from transmitting the data of the target user by using the slice instance of the target slice template.

Step 709: The second fixed-line device forbids, based on the second control message, the data of the target user from being transmitted by using the slice instance of the target slice template.

For step 708, refer to step 608. For step 709, refer to step 609. Details are not described in embodiments of this application.

Step 710: The first fixed-line device sends a third control message to the second fixed-line device when a target quantity is less than a quantity threshold, where the target quantity is a quantity of users corresponding to data transmitted by the second fixed-line device by using the slice instance of the target slice template, and the third control message indicates the second fixed-line device to delete the slice instance of the target slice template.

The data transmitted by the second fixed-line device by using the slice instance of the target slice template is controlled by the first fixed-line device, therefore the first fixed-line device can count a quantity of users corresponding to data transmitted by the second-fixed network device by using the slice instance of the target slice template. Therefore, the first fixed-line device can determine the target quantity. The first fixed-line device may compare the target quantity with the quantity threshold, to determine whether the third control message needs to be sent to the second device.

Step 711: The second fixed-line device deletes the slice instance of the target slice template based on the third control message.

For step 710, refer to step 611. For step 711, refer to step 612. Details are not described in embodiments of this application.

In conclusion, in the data transmission method provided in embodiments of this application, the first fixed-line device determines a corresponding target slice template based on the target SLA of the data of the target user, and controls the second fixed-line device to transmit the data of the target user by using a slice instance of the target slice template. In this way, data of users of different SLAs is transmitted by using slice instances of different slice templates, so that the data of users of different SLAs is transmitted on different data channels. Therefore, flexibility of data transmission in a fixed-line network is improved.

In addition, when data is transmitted, the slice instance of the target slice template corresponding to the target SLA can reach the target SLA. Therefore, transmit the data of the target user by using the slice instance of the target slice template, so that an SLA of the data of the target user can be ensured. According to the data transmission method provided in embodiments of this application, SLAs of various data can be ensured, and flexibility of data transmission can be improved.

Optionally, the ONT in the fixed-line communication system provided in embodiments of this application may be replaced with an optical network unit (Optical Network Unit, ONU), and the ONT in the data transmission method provided in embodiments of this application may be replaced with an ONU. This is not limited in embodiments of this application.

In embodiments of this application, communication between the first fixed-line device and the second fixed-line device may be direct communication, or may be communication between the first fixed-line device and the second fixed-line device by using another device. This is not limited in this embodiment of this application.

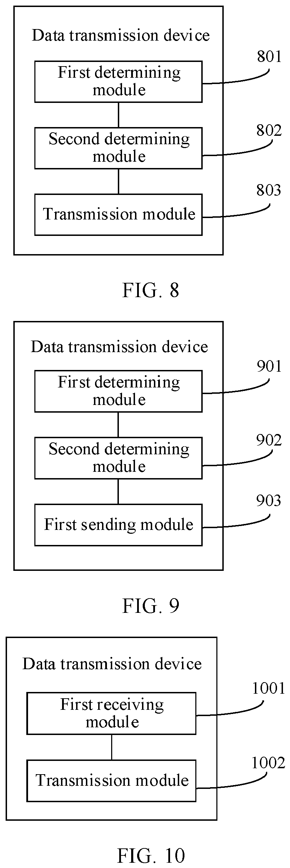

In the foregoing embodiments, the data transmission method provided in embodiments of this application is described with reference to FIG. 1 to FIG. 7A and FIG. 7B. The following describes fixed-line devices provided in embodiments of this application with reference to FIG. 8 to FIG. 10.

For example, FIG. 8 is a schematic diagram of a structure of another data transmission device according to an embodiment of this application. The data transmission device may be applied to a first fixed-line device, and the first fixed-line device may be the OLT or the ONT in the fixed-line communication system shown in FIG. 1 or FIG. 2. As shown in FIG. 8, the data transmission device includes:
a first determining module 801, configured to determine a target service level agreement SLA of data of a target user in a fixed-line network;
a second determining module 802, configured to determine, based on a correspondence between an SLA of data and a slice template, a target slice template corresponding to the target SLA; and
a transmission module 803, configured to transmit the data of the target user by using a slice instance of the target slice template.

Optionally, an SLA carried in the data of the target user is the target SLA.

Optionally, an SLA corresponding to a type of the data of the target user is the target SLA.

Optionally, the data transmission device further includes:
a third determining module (not shown in FIG. 8), configured to determine, based on a correspondence between a user and an SLA, an SLA corresponding to the target user, where
the second determining module 802 is configured to: when the target SLA is less than or equal to the SLA corresponding to the target user, determine, based on the correspondence between an SLA of data and a slice template, the target slice template corresponding to the target SLA.

Optionally, the data transmission device further includes:
a forbidding module (not shown in FIG. 8), configured to: when target duration reaches a duration threshold, forbid the data of the target user from being transmitted by using the slice instance of the target slice template, where the target duration is duration since the first fixed-line device stops using the slice instance of the target slice template to transmit the data of the target user.

Optionally, the data transmission device further includes:
a deletion module (not shown in FIG. 8), configured to delete the slice instance of the target slice template when a target quantity is less than a quantity threshold, where the target quantity is a quantity of users corresponding to data transmitted by the first fixed-line device by using the slice instance of the target slice template.

Optionally, the first fixed-line device is connected to a second fixed-line device, and the data transmission device further includes:
a first sending module (not shown in FIG. 8), configured to: after the target slice template is determined, send a first control message to the second fixed-line device, where the first control message indicates the second fixed-line device to transmit the data of the target user by using another slice instance of the target slice template.

Optionally, the data transmission device further includes:
a second sending module (not shown in FIG. 8), configured to send a second control message to the second fixed-line device when the target duration reaches the duration threshold, where the target duration is duration since the first fixed-line device stops using the slice instance of the target slice template to transmit the data of the target user, and the second control message indicates that the second fixed-line device is forbidden from transmitting the data of the target user by using the slice instance of the target slice template.

Optionally, the data transmission device further includes:
a third sending module (not shown in FIG. 8), configured to send a third control message to the second fixed-line device when the target quantity is less than the quantity threshold, where the third control message indicates the second fixed-line device to delete the another slice instance of the target slice template, where the target quantity is the quantity of users corresponding to the data transmitted by the first fixed-line device by using the slice instance of the target slice template.

Optionally, the data transmission device is one of an optical line terminal OLT and an optical network terminal ONT, and the second fixed-line device is the other of the OLT and the ONT.

In conclusion, embodiments of this application provide a data transmission device. The data transmission device determines a corresponding target slice template based on a target SLA of the data of the target user, and transmits the data of the target user by using the slice instance of the target slice template. In this way, data of users of different SLAs is transmitted by using slice instances of different slice templates, so that the data of users of different SLAs is transmitted on different data channels. Therefore, flexibility of data transmission in a fixed-line is improved.

In addition, when data is transmitted, the slice instance of the target slice template corresponding to the target SLA can reach the target SLA. Therefore, transmit the data of the target user by using the slice instance of the target slice template, so that an SLA of the data of the target user can be ensured. According to the data transmission method provided in embodiments of this application, SLAs of various data can be ensured, and flexibility of data transmission can be improved.

For example, FIG. 9 is a schematic diagram of a structure of another data transmission device according to an embodiment of this application. The data transmission device may be applied to a first fixed-line device, and the first fixed-line device may be the controller in a fixed-line communication system shown in FIG. 2. As shown in FIG. 9, the data transmission device includes:
a first determining module 901, configured to determine a target service level agreement SLA of data of a target user in a fixed-line network;
a second determining module 902, configured to determine, based on a correspondence between an SLA of data and a slice template, a target slice template corresponding to the target SLA; and
a first sending module 903, configured to send a first control message to the second fixed-line device, where the first control message indicates the second fixed-line device to transmit the data of the target user by using a slice instance of the target slice template.

Optionally, an SLA carried in the data of the target user is the target SLA.

Optionally, an SLA corresponding to a type of the data of the target user is the target SLA.

Optionally, the data transmission device further includes: a third determining module (not shown in FIG. 9), configured to determine, based on a correspondence between a user and an SLA, an SLA corresponding to the target user; and a second determining module 902, configured to: when the target SLAis less than or equal to the SLA corresponding to the target user, determine, based on the correspondence between an SLA of data and a slice template, the target slice template corresponding to the target SLA.

Optionally, the data transmission device further includes: a second sending module (not shown in FIG. 9), configured to send a second control message to the second fixed-line device when target duration reaches a duration threshold, where the target duration is duration since the second fixed-line device stops using the slice instance of the target slice template to transmit the data of the target user, and the second control message indicates that the second fixed-line device is forbidden from transmitting the data of the target user by using the slice instance of the target slice template.

Optionally, the data transmission device further includes: a first receiving module (not shown in FIG. 9), configured to receive a duration message sent by the second fixed-line device, where the duration message indicates that the target duration reaches the duration threshold; and a fourth determining module (not shown in FIG. 9), configured to determine, based on the duration message, that the target duration reaches the duration threshold.

Optionally, the data transmission device further includes: a third sending module (not shown in FIG. 9), configured to send a third control message to the second fixed-line device when a target quantity is less than a quantity threshold, where the third control message indicates the second fixed-line device to delete the slice instance of the target slice template, where the target quantity is a quantity of users corresponding to data transmitted by the second fixed-line device by using the slice instance of the target slice template.

Optionally, the data transmission device is a controller, and the second fixed-line device is an optical line terminal OLT or an optical network terminal ONT.

In conclusion, embodiments of this application provide a data transmission device. The data transmission device determines a corresponding target slice template based on the target SLA of the data of the target user, and controls the second fixed-line device to transmit the data of the target user by using the slice instance of the target slice template. In this way, data of users of different SLAs is transmitted by using slice instances of different slice templates, so that the data of users of different SLAs is transmitted on different data channels. Therefore, flexibility of data transmission in a fixed-line network is improved.

In addition, when data is transmitted, the slice instance of the target slice template corresponding to the target SLA can reach the target SLA. Therefore, transmit the data of the target user by using the slice instance of the target slice template, so that an SLA of the data of the target user can be ensured. According to the data transmission method provided in embodiments of this application, SLAs of various data can be ensured, and flexibility of data transmission can be improved.

For example, FIG. 10 is a schematic diagram of a structure of another data transmission device according to an embodiment of this application. The data transmission device may be used in a second fixed-line device, and the second fixed-line device may be the OLT or the ONT in the fixed-line communication system shown in FIG. 1 or FIG. 2. As shown in FIG. 10, the data transmission device includes:
a first receiving module 1001, configured to receive a first control message sent by a first fixed-line device; and
a transmission module 1002, configured to transmit data of the target user based on the first control message by using the slice instance of the target slice template.

Optionally, the data transmission device further includes: a second receiving module (not shown in FIG. 10), configured to receive a second control message sent by the first fixed-line device; and a forbidding module (not shown in FIG. 10), configured to forbid, based on the second control message, the data of the target user from being transmitted by using the slice instance of the target slice template.

Optionally, the data transmission device further includes: a first sending module (not shown in FIG. 10), configured to send a duration message to the first fixed-line device when the target duration reaches a duration threshold, where the duration message indicates that the target duration reaches the duration threshold, where the target duration is duration since the second fixed-line device stops using the slice instance of the target slice template to transmit the data of the target user.

Optionally, the data transmission device further includes: a third receiving module (not shown in FIG. 10), configured to receive a third control message sent by the first fixed-line device; and a deletion module (not shown in FIG. 10), configured to delete the slice instance of the target slice template based on the third control message.

Optionally, the data transmission device is a controller, and the second fixed-line device is an OLT or an ONT; or the data transmission device is one of the OLT and the ONT, and the second fixed-line device is the other of the OLT and the ONT.

In conclusion, embodiments of this application provide a data transmission device. The data transmission device can transmit the data of the target user by using a slice instance of a target slice template according to an indication of a first fixed-line device. In this way, data of users of different SLAs is transmitted by using slice instances of different slice templates, so that the data of users of different SLAs is transmitted on different data channels. Therefore, flexibility of data transmission in a fixed-line network is improved.

In addition, when data is transmitted, the slice instance of the target slice template corresponding to the target SLA can reach the target SLA. Therefore, transmit the data of the target user by using the slice instance of the target slice template, so that an SLA of the data of the target user can be ensured. According to the data transmission method provided in embodiments of this application, SLAs of various data can be ensured, and flexibility of data transmission can be improved.

An embodiment of this application provides a computer-readable storage medium. The computer-readable storage medium stores instructions, and when the instructions are run on a computer, the computer is enabled to perform any data transmission method for a controller, an OLT, or an ONT provided in embodiments of this application.

An embodiment of this application provides a computer program product including instructions. When a computer runs the computer program product, the computer is enabled to perform any data transmission method for a controller, an OLT, or an ONT provided in embodiments of this application.

All or some of the foregoing embodiments may be implemented by using software, hardware, firmware, or any combination thereof. When the software is used for implementing embodiments, all or some of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a computer network, or another programmable apparatus. The computer instructions may be stored in a computer-readable storage medium, or transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium, a semiconductor medium (for example, a solid-state drive), or the like.

In this application, the terms "first", "second", and the like are merely intended for description, but cannot be understood as an indication or implication of relative importance. The term "at least one" refers to one or more, and the term "a plurality of' refers to two or more, unless expressly limited otherwise.

For different types of embodiments such as the method embodiment and the apparatus embodiment provided in embodiments of this application, refer to each other. This is not limited in embodiments of this application. A sequence of the operations of the method embodiment provided in embodiments of this application can be properly adjusted, and the operations can be correspondingly added or deleted based on a situation. Any method that can be easily figured out by a person skilled in the art within a technical scope disclosed in this application shall fall within the protection scope of this application. Therefore, details are not described again.

In the corresponding embodiments provided in this application, it should be understood that the disclosed system, device, and apparatus may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts described as units may or may not be physical units, may be located in one position, or may be distributed on a plurality of devices. Some or all of the units may be selected based on actual requirements to achieve the objectives of the solutions of embodiments.

The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A data transmission method, wherein the method comprises:
determining, by a first fixed-line device, a target service level agreement SLA of data of a target user in a fixed-line network;
determining, by the first fixed-line device based on a correspondence between an SLA of data and a slice template, a target slice template corresponding to the target SLA; and
transmitting, by the first fixed-line device, the data of the target user by using a slice instance of the target slice template.

2. The method according to claim 1, wherein an SLA carried in the data of the target user is the target SLA.

3. The method according to claim 1, wherein an SLA corresponding to a type of the data of the target user is the target SLA.

4. The method according to any one of claims 1 to 3, wherein before the determining, by the first fixed-line device based on a correspondence between an SLA of data and a slice template, a target slice template corresponding to the target SLA, the method further comprises:
determining, by the first fixed-line device based on a correspondence between a user and an SLA, an SLA corresponding to the target user; and
the determining, by the first fixed-line device based on a correspondence between an SLA of data and a slice template, a target slice template corresponding to the target SLA comprises:
when the target SLA is less than or equal to the SLA corresponding to the target user, determining, by the first fixed-line device based on the correspondence between an SLA of data and a slice template, the target slice template corresponding to the target SLA.

5. The method according to any one of claims 1 to 4, wherein after the transmitting, by the first fixed-line device, the data of the target user by using a slice instance of the target slice template, the method further comprises:
when target duration reaches a duration threshold, forbidding, by the first fixed-line device, the data of the target user from being transmitted by using the slice instance of the target slice template, wherein
the target duration is duration since the first fixed-line device stops using the slice instance of the target slice template to transmit the data of the target user.

6. The method according to claim 5, wherein the method further comprises:
deleting, by the first fixed network device, the slice instance of the target slice template when a target quantity is less than a quantity threshold, wherein
the target quantity is a quantity of users corresponding to data transmitted by the first fixed-line device by using the slice instance of the target slice template.

7. The method according to any one of claims 1 to 6, wherein the first fixed-line device is connected to a second fixed-line device, and the method further comprises:
after the first fixed-line device determines the target slice template, sending, by the first fixed-line device, a first control message to the second fixed-line device, wherein the first control message indicates the second fixed-line device to transmit the data of the target user by using another slice instance of the target slice template.

8. The method according to claim 7, wherein after the sending, by the first fixed-line device, a first control message to the second fixed-line device, the method further comprises:
sending, by the first fixed-line device, a second control message to the second fixed-line device when the target duration reaches the duration threshold, wherein
the target duration is the duration since the first fixed-line device stops using the slice instance of the target slice template to transmit the data of the target user, and the second control message indicates that the second fixed-line device is forbidden from transmitting the data of the target user by using the another slice instance of the target slice template.

9. The method according to claim 8, wherein the method further comprises:
sending, by the first fixed-line device, a third control message to the second fixed-line device when the target quantity is less than the quantity threshold, wherein the third control message indicates the second fixed-line device to delete the another slice instance of the target slice template, wherein
the target quantity is the quantity of users corresponding to the data transmitted by the first fixed-line device by using the slice instance of the target slice template.

10. The method according to any one of claims 7 to 9, wherein the first fixed-line device is one of an optical line terminal OLT and an optical network terminal ONT, and the second fixed-line device is the other of the OLT and the ONT.

11. A data transmission method, wherein the method comprises:
determining, by a first fixed-line device, a target service level agreement SLA of data of a target user in a fixed-line network;
determining, by the first fixed-line device based on a correspondence between an SLA of data and a slice template, a target slice template corresponding to the target SLA; and
sending, by the first fixed-line device, a first control message to a second fixed-line device, wherein the first control message indicates the second fixed-line device to transmit the data of the target user by using a slice instance of the target slice template.

12. The method according to claim 11, wherein an SLA carried in the data of the target user is the target SLA.

13. The method according to claim 11, wherein an SLA corresponding to a type of the data of the target user is the target SLA.

14. The method according to any one of claims 11 to 13, wherein before the determining, by the first fixed-line device based on a correspondence between an SLA of data and a slice template, a target slice template corresponding to the target SLA, the method further comprises:
determining, by the first fixed-line device based on a correspondence between a user and an SLA, an SLA corresponding to the target user; and
the determining, by the first fixed-line device based on a correspondence between an SLA of data and a slice template, a target slice template corresponding to the target SLA comprises:
when the target SLA is less than or equal to the SLA corresponding to the target user, determining, by the first fixed-line device based on the correspondence between an SLA of data and a slice template, the target slice template corresponding to the target SLA.

15. The method according to any one of claims 11 to 14, wherein after the sending, by the first fixed-line device, a first control message to a second fixed-line device, the method further comprises:
sending, by the first fixed-line device, a second control message to the second fixed-line device when target duration reaches a duration threshold, wherein
the target duration is duration since the second fixed-line device stops using the slice instance of the target slice template to transmit the data of the target user, and the second control message indicates that the second fixed-line device is forbidden from transmitting the data of the target user by using the slice instance of the target slice template.

16. The method according to claim 15, wherein before the sending, by the first fixed-line device, a second control message to the second fixed-line device, the method further comprises:
receiving, by the first fixed-line device, a duration message sent by the second fixed-line device, wherein the duration message indicates that the target duration reaches the duration threshold; and
determining, by the first fixed-line device based on the duration message, that the target duration reaches the duration threshold.

17. The method according to claim 15 or 16, wherein the method further comprises:
sending, by the first fixed-line device, a third control message to the second fixed-line device when a target quantity is less than a quantity threshold, wherein the third control message indicates the second fixed-line device to delete the slice instance of the target slice template, wherein
the target quantity is a quantity of users corresponding to data transmitted by the second fixed-line device by using the slice instance of the target slice template.

18. The method according to any one of claims 11 to 17, wherein the first fixed-line device is a controller, and the second fixed-line device is an optical line terminal OLT or an optical network terminal ONT.

19. A data transmission method, wherein the method comprises:
receiving, by a second fixed-line device, a first control message sent by a first fixed-line device; and
transmitting, by the second fixed-line device data of a target user based on the first control message by using a slice instance of a target slice template.

20. The method according to claim 19, wherein after the transmitting, by the second fixed-line device, data of a target user based on the first control message by using a slice instance of a target slice template, the method further comprises:
receiving, by the second fixed-line device, a second control message sent by the first fixed-line device; and
forbidding, by the second fixed-line device based on the second control message, the data of the target user from being transmitted by using the slice instance of the target slice template.

21. The method according to claim 20, wherein before the receiving, by the second fixed-line device, a second control message sent by the first fixed-line device, the method further comprises:
sending, by the second fixed-line device, a duration message to the first fixed-line device when target duration reaches a duration threshold, wherein the duration message indicates that the target duration reaches the duration threshold, wherein
the target duration is duration since the second fixed-line device stops using the slice instance of the target slice template to transmit the data of the target user.

22. The method according to claim 19 or 21, wherein the method further comprises:
receiving, by the second fixed-line device, a third control message sent by the first fixed-line device; and
deleting, by the second fixed-line device, the slice instance of the target slice template based on the third control message.

23. The method according to any one of claims 19 to 22, wherein the first fixed-line device is a controller, and the second fixed-line device is an optical line terminal OLT or an optical network terminal ONT; or
the first fixed-line device is one of the OLT and the ONT, and the second fixed-line device is the other of the OLT and the ONT.

24. A data transmission device, wherein the data transmission device is used in a first fixed-line device, and the data transmission device comprises:
a first determining module, configured to determine a target service level agreement SLA of data of a target user in a fixed-line network;
a second determining module, configured to determine, based on a correspondence between an SLA of data and a slice template, a target slice template corresponding to the target SLA; and
a transmission module, configured to transmit the data of the target user by using a slice instance of the target slice template.

25. A data transmission device, wherein the data transmission device is used in a first fixed-line device, and the data transmission device comprises:
a first determining module, configured to determine a target service level agreement SLA of data of a target user in a fixed-line network;
a second determining module, configured to determine, based on a correspondence between an SLA of data and a slice template, a target slice template corresponding to the target SLA; and
a first sending module, configured to send a first control message to a second fixed-line device, wherein the first control message indicates the second fixed-line device to transmit the data of the target user by using a slice instance of the target slice template.

26. A data transmission device, wherein the data transmission device is used in a second fixed-line device, and the data transmission device comprises:
a first receiving module, configured to receive a first control message sent by a first fixed-line device; and
a transmission module, configured to transmit data of a target user based on the first control message by using a slice instance of a target slice template.

27. A fixed-line device, wherein the fixed-line device comprises a processor and a memory, wherein
the processor is configured to execute a program stored in the memory, to implement the data transmission method according to any one of claims 1 to 23.

28. A fixed-line communication system, wherein the fixed-line communication system comprises a first fixed-line device, wherein
the first fixed-line device is the data transmission device according to claim 24 or 25.

29. The fixed-line communication system according to claim 28, wherein the fixed-line communication system further comprises a second fixed-line device, wherein
the second fixed-line device is the data transmission device according to claim 26.

30. A computer-readable storage medium, wherein the computer-readable storage medium stores instructions, and when the instructions are run on a computer, the computer is enabled to perform the data transmission method according to any one of claims 1 to 23.
